# EUROPÄISCHE PATENTSCHRIFT

(11) **EP 2 851 150 B1**
(45) Veröffentlichungstag und Bekanntmachung des Hinweises auf die Patenterteilung: **25.03.2020**
(21) Anmeldenummer: 14183769.0
(22) Anmeldetag: 05.09.2014
(51) Int. Cl.: B23F 21/00, B23F 5/16, B23F 21/06

(54) **Werkzeug, Verfahren und Maschine zum Erzeugen eines Verzahnungsprofils an einem Werkstück durch Wälzschälen**
Tool, method and machine for generating a toothed profile on a workpiece by skiving
Outil, procédé et machine destinés à fabriquer un profil denté sur une pièce par taillage des engrenages par développante

(30) Priorität: 13.09.2013 DE 102013110130
(43) Veröffentlichungstag der Anmeldung: 25.03.2015
(73) Patentinhaber: Präwema Antriebstechnik GmbH, 37269 Eschwege/Werra (DE)
(72) Erfinder: Schieke, Jörg, 99092 Erfurt (DE); Holderbein, Walter, 37269 Eschwege (DE)
(74) Vertreter: Cohausz & Florack

(56) Entgegenhaltungen:
- DE-A1-102009 003 601
- GB-A- 189 807 959
- US-A- 5 079 877

## Beschreibung

Die Erfindung betrifft ein Werkzeug zum Erzeugen eines Verzahnungsprofils an einem Werkstück durch Wälzschälen, ein Verfahren zum Erzeugen eines Verzahnungsprofils an einem Werkstück durch Ausführen einer gekoppelten Wälzschälbewegung zwischen einem Wälzschälwerkzeug und dem Werkstück, wobei das Werkzeug um eine Werkzeugachse und das Werkstück um eine Werkstückachse rotiert, sowie eine Maschine zum Erzeugen eines Verzahnungsprofils an einem Werkstück mittels Wälzschälen, umfassend ein Wälzschälwerkzeug, einen ersten Drehantrieb zum rotierenden Antreiben des Wälzschälwerkzeugs um eine Werkzeugachse, eine Einspannung zum Halten des Werkstücks und einen zweiten Drehantrieb zum rotierenden Antreiben des jeweiligen in der Einspannung gehaltenen Werkstücks, wobei die Drehantriebe miteinander gekoppelt sind.

Wie die GB 7959 A zeigt, ist es seit langem bekannt, mit einem nach Art eines Kronrads ausgebildeten Werkzeug an einem Werkstück eine Außenverzahnung abzubilden. Die Drehachsen von Werkstück und Werkzeug treffen einander dabei unter einem fixen Achskreuzwinkel und der Materialabtrag am Werkstück findet durch eine im Kontaktpunkt quer zur Zahnlücke entlang der Zahnflanken der zu erzeugenden Verzahnung gerichteten Relativbewegung statt.

Ein ferner liegender, aus der US 5,079,877 A bekannter Stand der Technik beschäftigt sich mit der Erzeugung einer Stirnverzahnung an einem aus einem abrasiven Material bestehenden, scheibenförmigen Werkzeugrohling. Dazu wird ein Werkzeug mit einer Außenverzahnung eingesetzt, die der am Werkzeugrohling abzubildenden Verzahnung entspricht. Die Drehachsen von Werkzeugrohling und Werkzeug sind dabei rechtwinklig zueinander und mit einem Achsversatz ausgerichtet.

Auch aus der DE 10 2009 003 601 A1 ist ein Verfahren zum Herstellen eines Kronenrades bekannt. Bei diesem Verfahren wird eine Maschine eingesetzt, die eine um eine Werkstückspindelachse drehbare Werkstückspindel zum Drehantreiben eines zu verzahnenden Werkstücks, eine um eine Werkzeugspindelachse drehbare Werkzeugspindel zum Drehantreiben eines Schneidkanten aufweisenden Werkzeuges im Synchronlauf zur Werkstückspindel und eine Vorschubeinrichtung zur Relativverlagerung von Werkstückspindel und Werkzeugspindel in der Konusfläche des Werkstücks in einer um einen Winkel zur Werkzeugspindelachse geneigt verlaufenden Vorschubrichtung umfasst. Dabei ist das Werkzeug ein Schälrad, bei dem die Schneidkanten in der Stirnseite liegen und von Rändern der Rippen ohne Zähne und deren geneigt zur Umlaufebene des Werkzeuges verlaufenden Stirnflächen gebildet sind.

Wälzschälen ist ein kontinuierliches spanabhebendes Verfahren zur Herstellung von Verzahnungen. Dieser Fertigungsprozess vereint Wälzfräsen und Stoßen durch kontinuierliches Abwälzen mit axialem Vorschub. Die Wirtschaftlichkeit der Wälzschältechnologie ergibt sich somit daraus, dass sich in kurzer Zeit Verzahnungen neben einer Störkontur herstellen lassen. Störkonturen sind dabei Wangen, Bünde, Absätze und desgleichen, die beim konventionellen Fräsen der dazu erforderlichen Vorschubbewegung im Wege stehen würden. Durch Wälzschälen lassen sich dabei Innen- und Außenverzahnungen fertigen. Charakteristisch für das Wälzschälen ist die schräge Anordnung der Achsen von Werkzeug und Werkstück. Durch die gekreuzte Achsanordnung entsteht eine Relativgeschwindigkeit zwischen Werkzeug und Werkstück. Diese Relativbewegung wird als Schnittbewegung ausgenutzt und hat seine Hauptschnittrichtung entlang der Zahnlücke des Werkstücks ("Zahnlückenrichtung"). Die Größe der Schnittgeschwindigkeit ist von der jeweiligen Größe des Achskreuzwinkels und von der Drehzahl der Bearbeitungsspindeln abhängig.

Eine detaillierte Darstellung von derzeit üblichen Verfahren zum Herstellen von Verzahnungen durch Wälzschälen findet sich in der EP 2 520 390 A1 und EP 2 537 616 A1, auf die hier zum Nachweis des fachmännischen Verständnisses ausdrücklich Bezug genommen wird. Der Oberbegriff von Anspruch 1 basiert auf der EP 2 520 390 A1.

Um während der Fertigung eines Werkstücks den für die Schnittbewegung erforderlichen Schwenkwinkel zwischen der Werkstück- und der Werkzeugachse in einer Werkzeugmaschine abzubilden, wird bei konventionellen Wälzschälmaschinen zumindest eine Schwenkachse zum relativen Verschwenken der Werkzeugspindel entgegen der Werkstückdrehachse benötigt.

Die effiziente Planung und Durchführung komplexer Zerspanprozesse, insbesondere bei der Herstellung von Verzahnungen, die eine Vielzahl von simultan zu steuernden Achsen innerhalb einer Werkzeugmaschine erfordern, werden in der fertigungstechnischen Praxis dank leistungsstarker CAM-Systeme (Computer-Aided-Manufacturing) ermöglicht. Mit der Anzahl der für einen Fertigungsprozess innerhalb einer Werkzeugmaschine vorzusehenden Maschinenachsen steigt jedoch auch die Komplexität der bereitzustellenden Werkzeugmaschine. Erhöhte Anforderungen beispielsweise an die Maschinensteifigkeiten, die Mess- und Antriebssysteme oder auch die Maschinensteuerung führen insgesamt zu einer Erhöhung der Maschinen- und der Fertigungsstückkosten. Es wird daher angestrebt, die für einen Fertigungsprozess erforderliche Maschinenkinematik zum Erzeugen der geforderten Werkstückgeometrie auf eine möglichst geringe Anzahl von Maschinenachsen zu beschränken.

Vor dem Hintergrund des voranstehend erläuterten Standes der Technik bestand die Aufgabe der Erfindung darin, ein Werkzeug, ein Verfahren und eine Maschine anzugeben, die bei vermindertem Fertigungsaufwand die Herstellung eines Verzahnungsprofils an einem Werkstück durch Wälzschälen ermöglichen.

Die Erfindung hat diese Aufgabe in Bezug auf das Werkzeug dadurch gelöst, dass ein erfindungsgemäßes Werkzeug mindestens die in Anspruch 1 angegebenen Merkmale besitzt.

In Bezug auf das Verfahren hat die Erfindung die oben genannte Aufgabe dadurch gelöst, dass bei der Herstellung eines Verzahnungsprofils an einem Werkstück die in Anspruch 7 angegebenen Arbeitsschritte durchlaufen werden. Schließlich besteht die erfindungsgemäße Lösung der oben genannten Aufgabe in Bezug auf die Maschine darin, dass eine solche Maschine zum Wälzfräsen die in Anspruch 11 angegebenen Merkmale aufweist. Vorteilhafte Ausgestaltungen der Erfindung sind in den abhängigen Ansprüchen angegeben und werden nachfolgend wie der allgemeine Erfindungsgedanke im Einzelnen erläutert. Ein erfindungsgemäßes Werkzeug zum Erzeugen eines Verzahnungsprofils an einem Werkstück durch Wälzschälen ist demnach als Kronenrad ausgebildet, an dessen Stirnseite ein Schneidenprofil vorgesehen ist, das im Gebrauch das Verzahnungsprofil an dem Werkstück abbildet.

Bei einem erfindungsgemäßen Werkzeug erhebt sich folglich an einer Stirnseite eines Werkzeuggrundkörpers in axialer Richtung eine Verzahnung mit einem Schneidenprofil, das im Wälzschälbetrieb mit einer Schneidfläche in das jeweilige Werkstück eintaucht und dort unter Abschälen von Spänen das jeweilige Verzahnungsprofil freilegt. Bei dem Werkzeuggrundkörper kann es sich beispielsweise um einen Ring oder eine Scheibe handeln, die mit einem geeignet geformten Halterabschnitt verkoppelt oder mit einem anderen geeigneten Koppelglied versehen ist, über den oder das im Gebrauch die Ankopplung des Werkzeugs an eine Werkzeugspindel einer Werkzeugmaschine erfolgt. Typischerweise sind bei dem erfindungsgemäßen Werkzeug der Grundkörper und der Halterabschnitt aus einem Stück geformt, wobei am freien Ende des Halterabschnitts ein Koppelabschnitt ausgebildet ist, über den eine formschlüssige und drehmomentfeste Ankopplung an die Werkzeugspindel der jeweiligen Wälzschälmaschine erfolgen kann.

Die an einem erfindungsgemäßen Werkzeug vorgesehene, das jeweilige Schneidenprofil stützende Verzahnung kann eine Planverzahnung, insbesondere eine planseitige Verzahnung sein, bei der die einzelnen Zähne ausgehend von einem gedachten gemeinsames Zentrum in radialer Richtung ausgerichtet sind. In praxisgerechter Ausführung ist die Verzahnung nach Art eines Rings kreisrund umlaufend in einem Randbereich der Stirnseite des Werkzeugs ausgebildet.

Die Spanflächen des Schneidenprofils eines erfindungsgemäßen Werkzeugs sind dabei optimaler Weise an den außenumfangsseitigen Stirnseiten der Zähne der Verzahnung vorhanden. Die nach außen orientierten Spanflächen begünstigen hier eine sichere Spanabfuhr, da der Spanraum in Spanrichtung nicht durch die umliegenden Werkzeugschneiden begrenzt ist. Das Werkzeug neigt somit nicht dazu, mit Spänen zugesetzt zu werden, wodurch die Schneiden des Schneidenprofils beschädigt werden könnten.

Die Verzahnung eines erfindungsgemäßen Werkzeugs kann in radialer Richtung einen Schrägungswinkel nach Art einer Schrägverzahnung aufweisen. Die Verzahnung wird in diesem Fall optimalerweise so ausgebildet, dass es über seine Profilbreite während des Wälzschälens zu wenigstens einem Zeitpunkt entlang der Zahnlückenrichtung, bei einer zu erzeugenden Gradverzahnung also bei einem Eingriff in das Werkstück zu mindestens einem Zeitpunkt parallel zur Werkstückdrehachse ausgerichtet ist. Auch kann die Verzahnung ausgehend von den Spanflächen des Schneidenprofils über die Profilbreite verjüngt sein. Auf diese Weise können sogenannte konstruktive Freiwinkel erzeugt werden, die einen kollisionsfreien Schneideneingriff im Bereich der Freiflächen sicherstellen. Um diese Wirkung zu unterstützen, können alternativ oder ergänzend sowohl die Profilhöhe als auch die Profildicke der Zähne der Verzahnung des erfindungsgemäßen Werkzeugs ausgehend von den jeweiligen Spanflächen des Schneidenprofils in Richtung der Drehachse abnehmen.

Bei einem erfindungsgemäßen Verfahren zum Erzeugen eines Verzahnungsprofils an einem um eine Werkstückachse rotierenden Werkstück durch Ausführen einer gekoppelten Wälzschälbewegung zwischen einem um eine Werkzeugachse rotierenden Wälzschälwerkzeug und dem Werkstück wird erfindungsgemäß ein erfindungsgemäßes Werkzeug eingesetzt, wobei die Werkzeugachse und die Werkstückachse nach Art der Drehachsen eines Winkelgetriebes einander unter einem Achskreuzwinkel kreuzend zueinander ausgerichtet werden und gleichzeitig ein Achsversatz zwischen der Werkstückachse und der Werkzeugachse vorgesehen wird, um eine Schnittgeschwindigkeitskomponente in Zahnlückenrichtung des zu erzeugenden Verzahnungsprofils zwischen dem Werkstück und dem Werkzeug zu bewirken.

Wenn hier von einem Achsversatz zwischen einem Werkzeug und einem Werkstück gesprochen wird, so ist dieser Achsversatz mit dem Achsversatz vergleichbar, der bei einem Kegelradgetriebe oder Kronenradgetriebe üblicherweise verwirklicht wird. Liegt kein Achsversatz vor, so schneiden sich die Drehachsen von Werkzeug und Werkstück in einem Punkt. Im Fall eines Achsversatzes, wie er von der Erfindung vorgeschrieben wird, schneiden sich die Drehachsen von Werkzeug und Werkstück jedoch nicht. Der zwischen ihnen bestehende Achskreuzwinkel kann dann nur dadurch ermittelt werden, dass die Drehachse des Werkstücks in eine Ebene projiziert wird, in der die Drehachse des Werkzeugs liegt, oder umgekehrt. Die kürzeste Strecke zwischen der jeweiligen Ebene und der davon entfernt angeordneten Drehachse wird als "Achsversatz" bezeichnet. Der Achskreuzwinkel zwischen der Werkstück- und der Werkzeugachse in einer Projektion der Achsen auf die ursprünglich von den Achsen aufgespannte Ebene, die einer Betrachtung der Achsen entlang des durch den Achsversatz ausgebildeten Gemeinlots entspricht, bleibt dabei durch den Achsversatz unbeeinflusst.

Durch den Achsversatz entsteht zwischen den abwälzenden Zahnflanken von Schneidenprofil und zu erzeugendem Verzahnungsprofil eine zusätzliche Gleitbewegung in Zahnlückenrichtung. Diese Gleitbewegung wird beim erfindungsgemäßen Wälzschälverfahren zum Erzeugen der Schnittgeschwindigkeit ausgenutzt. Bei einem erfindungsgemäßen Verfahren wird der für die Spanbildung erforderliche Schubanteil der Relativbewegung von Schneidenprofil und zu erzeugendem Verzahnungsprofil in Zahnlückenrichtung nicht aus einem gegenseitigen Verschwenken von Werkzeug- und Werkstückachse erzielt, sondern ist dem Prozess durch die Vorgabe eines Achsversatzes aufgeprägt. Je größer der Achsversatz zwischen der Werkzeug- und der Werkstückachse ist, umso größer ist die Schnittgeschwindigkeit bzw. der translatorische Gleitanteil entlang der Zahnflanke, der an der Schneidkante aus der Werkzeugrotation in eine Schnittbewegung in Zahnlückenrichtung umgesetzt wird.

Bei dem erfindungsgemäßen Wälzschälverfahren zum Erzeugen eines Verzahnungsprofils an einem Werkstück kann folglich auf ein Verschwenken der Spindelachse relativ zur Rotationsachse des Werkstücks verzichtet werden. Demgemäß kann das Verfahren auf einer Werkzeugmaschine durchgeführt werden, die keine Schwenkachse zum Verschwenken der Spindelachse entgegen der Werkstückachse umfasst, sondern lediglich eine translatorische Positionierung der Spindelachse relativ zur Werkstückdrehachse vorsieht. Mit den reduzierten Anforderungen an die bereitzustellende Werkzeugmaschine können durch das erfindungsgemäße Verfahren die Maschinenkosten und dementsprechend auch die Fertigungsstückkosten im Vergleich zu den vorbekannten Wälzschälverfahren gesenkt werden. Mit der Erfindung steht somit ein Verfahren zur Verfügung, das auf besonders einfache und kostengünstige Weise das Fertigen einer Verzahnung im Wälzschälverfahren ermöglicht.

Die voranstehend zum erfindungsgemäßen Verfahren erläuterten Wirkungsweisen und Vorteile gelten in gleichem Maße für eine erfindungsgemäße Vorrichtung, die derart ausgerüstet und beschaffen ist, dass mit ihr das erfindungsgemäße Wälzschälen durchgeführt werden kann. Dementsprechend umfasst eine erfindungsgemäße Maschine zum Erzeugen eines Verzahnungsprofils an einem Werkstück mittels Wälzschälen ein Wälzschälwerkzeug, einen ersten Drehantrieb zum rotierenden Antreiben des Wälzschälwerkzeugs um eine Werkzeugachse, eine Einspannung zum Halten des Werkstücks und einen zweiten Drehantrieb zum rotierenden Antreiben des jeweiligen in der Einspannung gehaltenen Werkstücks, wobei die Drehantriebe miteinander gekoppelt sind. Erfindungsgemäß ist bei einer solchen Maschine das Werkzeug in erfindungsgemäßer Weise ausgebildet, wobei die Werkzeugachse und die Werkstückachse nach Art der Drehachsen eines Winkelgetriebes einander unter einem Achskreuzwinkel kreuzend zueinander ausgerichtet sind und ein Achsversatz zwischen der Werkstückachse und der Werkzeugachse vorgesehen ist, um eine Schnittgeschwindigkeitskomponente in Zahnlückenrichtung des zu erzeugenden Verzahnungsprofils zwischen dem Werkstück und dem Werkzeug zu bewirken.

Bei Nutzung der voranstehend erläuterten oder anderen Möglichkeiten zur Schaffung eines "konstruktiven Freiwinkels" kann bei einer erfindungsgemäßen Maschine oder bei der Durchführung des erfindungsgemäßen Verfahrens der zwischen Werkzeug- und Werkstückachse vorgesehene Achskreuzwinkel 90° betragen. Bei einer Ausrichtung der Achsen unter einem rechten Winkel, ist die Vorschubbewegung entlang der Zahnlücke besonders einfach abbildbar und kann über eine einzige lineare Maschinenachse ausgeführt werden.

Jedoch ist es auch möglich, durch Vorgabe eines von 90° abweichenden, beispielsweise im Bereich von 85 - 95°, insbesondere 85° bis <90° liegenden Achskreuzwinkels zwischen dem Werkzeug und dem Werkstück einen Neigungswinkel zum Erzeugen von kinematischen Freiwinkeln während des Wälzschälens einzustellen.

Der mit der Herstellung und dem Betrieb einer erfindungsgemäßen Maschine verbundene steuerungs- und herstellungstechnische Aufwand kann dadurch minimiert werden, dass der Achskreuzwinkel entsprechend einem zuvor ermittelten optimalen Winkel fest eingestellt wird.

In einer Variante des erfindungsgemäßen Verfahrens weist das Werkzeug austauschbare Schneideneinsätze auf. Insbesondere bei der Verwendung von Hartmetall als Schneidstoff kann der erforderliche Hartmetalleinsatz im Gegensatz zu einem einstückigen Werkzeug reduziert und damit die Werkzeugkosten gesenkt werden.

Das erfindungsgemäße Wälzschälverfahren eignet sich insbesondere für die Fertigung von gerad- oder schrägverzahnten Bauteilen, wie Zylinderrädern oder dergleichen. So können beispielsweise auch Ritzelwellen, Keilwellenverbindungen, Riemenscheiben oder Schiebemuffen und dergleichen mit dem erfindungemäßen Verfahren erzeugt werden.

Selbstverständlich können mit dem erfindungsgemäßen Wälzschälverfahren auch die bekannten Zahnflankenmodifikationen, wie z.B. Höhen- oder Breitenballigkeiten und Kopf- oder Fußrücknahmen etc., durch eine Anpassung der Prozesskinematik oder des Schneidenprofils erzielt werden.

Weiterhin ist es vorteilhaft, Schwenkbewegungen zu vermeiden und die Vorschub- und Relativbewegungen zwischen Werkzeug und Werkstück vorzugsweise durch lineare Maschinenachsen abzubilden, da diese in einfacher Weise eine hohe Positioniergenauigkeit gewährleisten.

Zur Bearbeitung des Werkstücks über die volle Zahnbreite des jeweils zu erzeugenden Verzahnungsprofils kann das erfindungsgemäße Werkzeug entlang einer Bewegungsachse bewegt werden, die achsparallel zur Werkstückdrehachse ausgerichtet ist. Zu diesem Zweck kann eine erfindungsgemäße Maschine mit einem entsprechenden Vorschubantrieb ausgestattet sein.

Nachfolgend wird die Erfindung anhand einer ein Ausführungsbeispiel darstellenden Zeichnung näher erläutert. Es zeigen jeweils schematisch:
- Fig. 1: ein Werkzeug und ein zylindrisches Werkstück im Wälzschälbetrieb in einer Draufsicht;
- Fig. 2: das Werkzeug und das Werkstück gemäß Fig. 1 in einer seitlichen Ansicht;
- Fig. 3a - 3j: Momentaufnahmen des Eingriffs einer Werkzeugschneide beim Erzeugen eines Verzahnungsprofils an einem Werkstück durch Wälzschälen in seitlicher Ansicht.

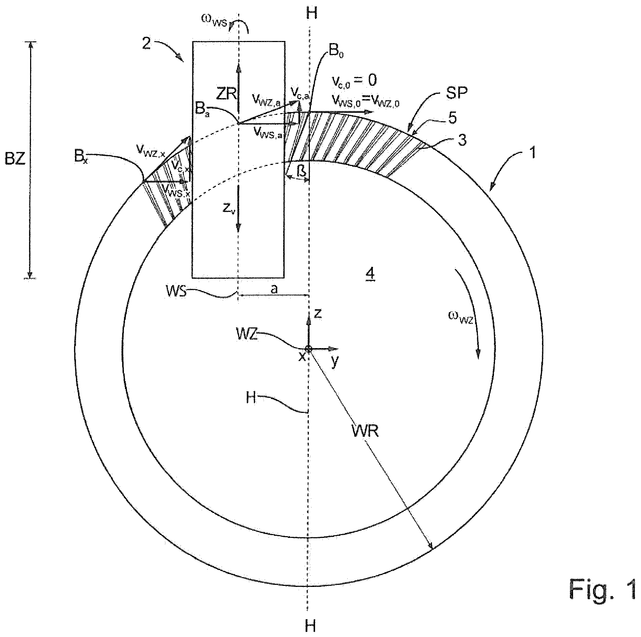

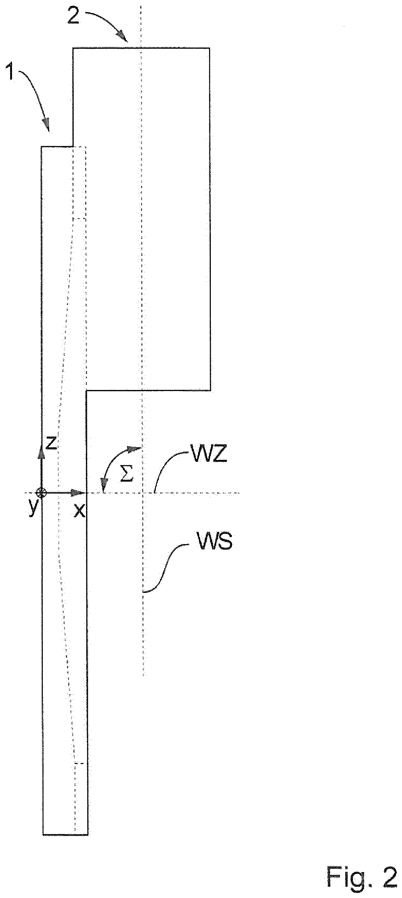

Die Figuren 1 und 2 zeigen eine vereinfachte Darstellung eines nach Art eines Kronenrads ausgebildeten Werkzeugs 1 und eines zylinderförmigen Werkstücks 2 in einer Momentaufnahme des erfindungsgemäßen Wälzschälverfahrens.

Zur Veranschaulichung der Eingriffbeziehungen und der relativen Achslagen wird ein dreidimensionales kartesisches Koordinatensystem (x,y,z) eingeführt, wobei die Werkzeugdrehachse WZ koaxial zur x-Koordinate ausgerichtet ist. Die Werkstückdrehachse WS verläuft dagegen parallel zu einer von der x- und z-Achse aufgespannten Hilfsebene H und ist mit einem Achsversatz a zu dieser Hilfsebene H positioniert. Der Achsversatz a entspricht in dem hier beschriebenen Beispiel etwa einem Viertel des Werkzeugradius WR.

In dem hier dargestellten Beispiel wird an dem Werkstück 1 durch Wälzschälen eine Geradverzahnung erzeugt. Die Zahnlückenrichtung ZR verläuft dabei parallel zur Werkstückdrehachse WS.

Das Werkzeug 1 und das Werkstück 2 führen zueinander eine kontinuierliche Teilungsbewegung aus. Die Werkzeugrotation ω_{WZ} um die x-Achse und die Werkstückrotation ω_{WS} um die Werkzeugdrehachse WS sind dabei entsprechend dem Zähnezahlverhältnis von Werkzeug 1 und Werkstück 2 gekoppelt.

Die in Fig. 1 dargestellten Geschwindigkeitsvektoren v_{c}, v_{WZ}, v_{WS} veranschaulichen schematisch, wie durch den Achsversatz a zwischen dem Werkstück 2 und dem Werkzeug 1, bzw. ihren jeweiligen Rotationsachsen WS,WZ, eine Schnittgeschwindigkeitskomponente v_{c} entlang der Zahnlückenrichtung ZR des zu erzeugenden Verzahnungsprofils VP entsteht. Dabei bilden die Geschwindigkeitsvektoren v_{c}, v_{WZ}, v_{WS} beispielhaft die jeweiligen Umfangsgeschwindigkeiten von Werkzeug v_{WZ} und Werkstück v_{WS} in einem Berührpunkt B zwischen einer Werkzeugschneide 3 und einer Zahnflanke ab.

Würde kein Achsversatz a (a=0) zwischen dem Werkzeug 1 und dem Werkstück 2 bestehen, so wären im Berührpunkt B₀ die Umfangsgeschwindigkeit v_{WZ,0} des Werkzeugs 1 und die Umfangsgeschwindigkeit v_{WS,0} des Werkstücks 2 gleich. Es würde sich dann keine Relativbewegung v_{c} in Zahnlückenrichtung ZR zwischen Werkzeug 1 und Werkstück 2 ergeben.

Die beim Wälzschälen mit erfindungsgemäß um einen Achsversatz a achsversetztem Werkzeug 1 und Werkstück 2 sich ergebenden Schneidbedingungen lassen sich anhand des Berührpunkts Bₐ erläutern. Die Umfangsgeschwindigkeiten v_{WS,a}, V_{WZ,a} von Werkstück 2 und Werkzeug 1 sind in diesem Fall nicht deckungsgleich, so dass sich hier eine Schnittgeschwindigkeitskomponente v_{c,a} entlang der Zahnlückenrichtung ZR ergibt.

Anhand des in Drehrichtung des Werkzeugs 1 vor dem Berührpunkt Bₐ liegenden Berührungspunkts Bₓ wird deutlich, dass der Anteil, der aus der Umfangsgeschwindigkeit v_{WZ} an einem Schneidenpunkt in eine Schubbewegung bzw. eine Schnittgeschwindigkeit v_{c} in Zahnlückenrichtung ZR umgesetzt wird, mit steigendem Achsversatz a zunimmt. Der maximal zulässige Achsversatz a ist hier insbesondere durch die notwendigen Frei- und Spanwinkel im Bereich der Werkzeugschneide 3 beschränkt.

Zur Bearbeitung des Werkstücks 2 über dessen volle Zahnbreite BZ bzw. der Werkstücklänge ist ein Axialvorschub zᵥ achsparallel zur Werkstückachse WS und parallel zur Hilfsebene H vorgesehen. Die Richtung des Axialvorschubs zᵥ ist beliebig, kann also auch gegenüber dem in der Figur dargestellten Axialvorschub zᵥ umgekehrt werden.

Wie in Figur 1 angedeutet ist das Werkzeug 1 nach Art eines Kronenrads mit einer Verzahnung SP mit Zähnen 3 ausgebildet, die in einem an den Außenumfang der Planseite 4 des Werkzeugs 1 angrenzenden Randbereich ringförmig um die Planseite 4 umläuft. Mit ihren außenumfangsseitigen Stirnseiten ihrer Zähne 3 bildet die Verzahnung SP ein Schneidenprofil, zu dem jeder Zahn an seiner Stirnfläche eine Spanfläche beiträgt.

Wie in Figur 1 ebenfalls vereinfacht dargestellt, weisen die Zähne 3 der Verzahnung SP die für ein Kronenrad typische Flankenform mit einem von außen nach innen abnehmenden "Eingriffswinkel" auf, wobei die Flanken in diesem Fall die Freiflächen des Werkzeugs 2 darstellen. Die Zähne 3 sind hier nur angedeutet und an dem Werkzeug 1 selbstverständlich über den gesamten Werkzeugumfang verteilt angeordnet.

Um die notwendigen Freiwinkel für den Wälzschälprozess vorzusehen weist die Verzahnung SP in radialer Richtung einen Schrägungswinkel β nach Art einer Schrägverzahnung auf. Der Schrägungswinkel β ist unter Berücksichtigung des vorgegebenen Achsversatzes a so zu gestalten, dass es während des Spanabtrags nicht zu einer Kollision zwischen Werkzeug 1 und Werkstück 2 im Bereich der Freiflächen kommt. Der Schrägungswinkel β kann so gestaltet sein, dass die Verzahnung SP der Zähne 3 über seiner Profilbreite während des Wälzschälens zu wenigstens einem Zeitpunkt entlang der Zahnlückenrichtung ZR ausgerichtet ist. So kann der Schrägungswinkel β beispielsweise dem von den Geschwindigkeitsvektoren von Werkstück v_{WZ,a} und Werkzeug v_{WS,a} eingeschlossenen Winkel entsprechen.

Zudem sind die Zähne 3 der Verzahnung SP ausgehend von ihrer dem Außenumfang zugeordneten stirnseitigen Spanfläche über der Profilbreite in radialer Richtung auf die Werkzeugdrehachse WZ zulaufend verjüngt. Gleichzeitig nehmen sowohl die Profilhöhe als auch die Profildicke der Zähne 3 vom äußeren Werkzeugumfang in Richtung der Werkzeugdrehachse WZ ab.

Der Achskreuzwinkel ∑ zwischen der Werkstückdrehachse WS und der Werkzeugdrehachse WZ beträgt beim hier beschriebenen Ausführungsbeispiel fest eingestellt 90°. Um während des Wälzschälens kinematische Freiwinkel relativ zu den Freiflächen des Werkzeugs 1 zu erzeugen, kann der Achskreuzwinkel ∑ von 90° verschieden sein, so dass sich eine Neigung zwischen dem Werkzeug 1 und dem Werkstück 2 ergibt. Vorzugsweise wird jedoch auf eine solche Neigung verzichtet. Sofern ein von 90° abweichender Achskreuzwinkel ∑ vorgesehen wird, sollte dieser gering sein. Eine solche geringe Neigung des Werkzeugs 1 oder des Werkstücks 2 entgegen ihrer 90°-Orientierung hat jedoch keinen maßgeblichen Einfluss auf die Schnittgeschwindigkeit v_{c} des Werkzeugs 1 in Zahnlückenrichtung ZR. Die Neigung betrifft lediglich die Änderung des Achskreuzwinkels ∑, so dass die Werkstückdrehachse WS weiterhin parallel zur Hilfsebene H erstreckt ist.

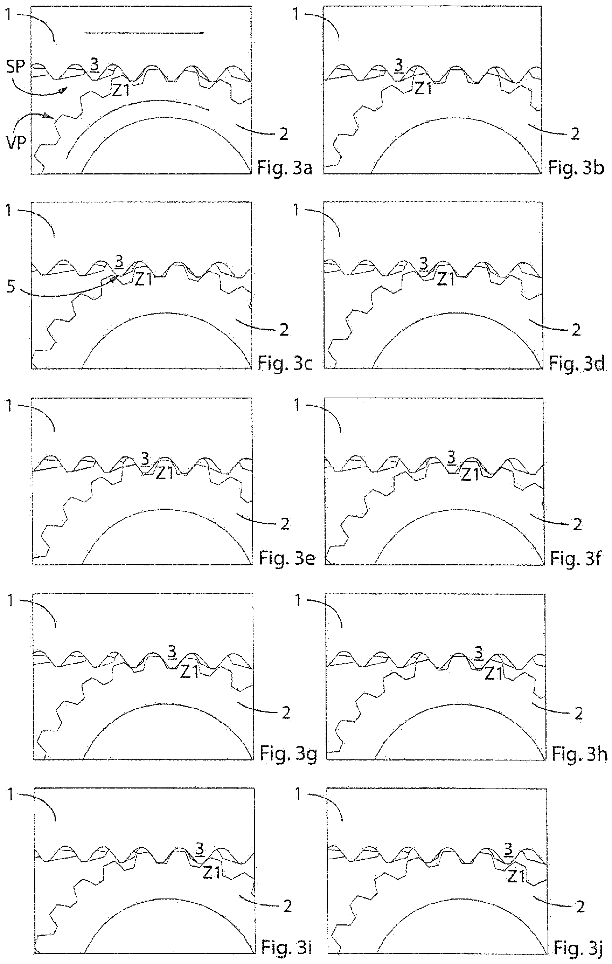

In den Figuren 3a - 3j kann anhand des Zahns Z1 des an dem Werkstück 2 zu erzeugenden Verzahnungsprofils VP nachvollzogen werden, wie dieser Zahn Z1 durch das am Werkzeug 1 vorhandene, durch die Zähne 3 der Verzahnung SP gebildete Schneidenprofil 5 erzeugt wird.

Die Erzeugung des Verzahnungsprofils VP erfolgt dabei in mehreren Durchläufen, wobei das Werkzeug 1 nach jedem Durchlauf in Richtung der Werkstückachse WS entlang einer Zustellachse, die koaxial zur Werkzeugachse WZ ausgerichtet ist, zugestellt wird, bis das Verzahnungsprofil VP vollständig fertig gestellt ist.

### BEZUGSZEICHEN

- 1: Werkzeug
- 2: Werkstück
- 3: Zahn der Verzahnung SP
- 4: Planseite
- 5: Schneidenprofil an der Verzahnung SP

- β: Schrägungswinkel
- ω_{WS}: Werkstückrotation
- ω_{WZ}: Werkzeugrotation
- a: Achsversatz
- B,Bₐ,Bₒ,Bₓ: Berührpunkte
- BZ: Zahnbreite
- H: Hilfsebene
- SP: Verzahnung
- v_{c}: Schnittgeschwindigkeitskomponente entlang der Zahnlückenrichtung ZR
- v_{c,a}: Schnittgeschwindigkeit entlang der Zahnlückenrichtung ZR im Berührpunkt Bₐ
- v_{c,x}: Schnittgeschwindigkeit entlang der Zahnlückenrichtung ZR im Berührpunkt Bₓ
- VP: Verzahnungsprofil
- v_{WS}: Umfangsgeschwindigkeit des Werkstücks 2
- v_{WZ}: Umfangsgeschwindigkeit des Werkzeugs 1
- v_{WZ,0}: Umfangsgeschwindigkeit des Werkzeugs 1 im Berührpunkt Bₒ
- v_{WS,0}: Umfangsgeschwindigkeit des Werkstücks 2 im Berührpunkt Bₒ
- v_{WZ,a}: Umfangsgeschwindigkeit des Werkzeugs 1 im Berührpunkt Bₐ
- v_{WS,a}: Umfangsgeschwindigkeit des Werkstücks 2 im Berührpunkt Bₐ
- v_{WZ,x}: Umfangsgeschwindigkeit des Werkzeugs 1 im Berührpunkt Bₓ
- v_{WS,x}: Umfangsgeschwindigkeit des Werkstücks 2 im Berührpunkt Bₓ
- WR: Werkzeugradius
- WS: Werkstückdrehachse
- WZ: Werkzeugdrehachse
- Z1: Zahn
- ZR: Zahnlückenrichtung
- zᵥ: Axialvorschub

## Patentansprüche

1. Wälzschälwerkzeug zum Erzeugen eines Verzahnungsprofils (VP) an einem Werkstück (2), **dadurch gekennzeichnet, dass** das Wälzschälwerkzeug (1) als Kronenrad ausgebildet ist, an dessen Stirnseite eine Verzahnung (SP) mit einem Schneidenprofil (5) vorgesehen ist, das im Gebrauch das Verzahnungsprofil (VP) an dem Werkstück (2) abbildet.

2. Wälzschälwerkzeug nach Anspruch 1, **dadurch gekennzeichnet, dass** das Schneidenprofil (5) am Außenumfang der Verzahnung (SP) ausgebildet ist.

3. Wälzschälwerkzeug nach einem der voranstehenden Ansprüche, **dadurch gekennzeichnet, dass** die Verzahnung (SP) ringförmig in einem dem Außenumfang der Stirnseite zugeordneten Randbereich des Wälzschälwerkzeugs (1) ausgebildet ist.

4. Wälzschälwerkzeug nach einem der voranstehenden Ansprüche, **dadurch gekennzeichnet, dass** die Verzahnung (SP) nach Art einer Schrägverzahnung ausgebildet ist.

5. Wälzschälwerkzeug nach einem der voranstehenden Ansprüche, **dadurch gekennzeichnet, dass** die Verzahnung (SP) ausgehend von der Spanfläche (5) über der Profilbreite verjüngt ist.

6. Wälzschälwerkzeug nach einem der voranstehenden Ansprüche, **dadurch gekennzeichnet, dass** die Profilhöhe und die Profildicke der Verzahnung (SP) ausgehend von der Spanfläche (5) in Richtung der Werkzeugachse (WZ) abnehmen.

7. Verfahren zum Erzeugen eines Verzahnungsprofils (VP) an einem Werkstück (2) durch Ausführen einer gekoppelten Wälzschälbewegung zwischen einem Wälzschälwerkzeug (1) und dem Werkstück (2), wobei das Wälzschälwerkzeug (1) um eine Werkzeugdrehachse (WZ) und das Werkstück (2) um eine Werkstückdrehachse (WS) rotiert, **dadurch gekennzeichnet, dass** das Wälzschälwerkzeug (1) gemäß einem der Ansprüche 1 bis 6 ausgebildet ist, **dass** die Werkzeugdrehachse (WZ) und die Werkstückdrehachse (WS) nach Art der Drehachsen eines Winkelgetriebes einander unter einem Achskreuzwinkel (∑) kreuzend zueinander ausgerichtet werden und **dass** ein Achsversatz (a) zwischen der Werkstückdrehachse (WS) und der Werkzeugdrehachse (WZ) vorgesehen wird, um eine Schnittgeschwindigkeitskomponente (v_{c}) in Zahnlückenrichtung (ZR) des zu erzeugenden Verzahnungsprofils (VP) zwischen dem Werkstück (2) und dem Wälzschälwerkzeug (1) zu bewirken.

8. Verfahren nach Anspruch 7, **dadurch gekennzeichnet, dass** der Achskreuzwinkel (∑) zwischen der Werkzeugdrehachse (WZ) und der Werkstückdrehachse (WS) 85 - 95° beträgt.

9. Verfahren nach Anspruch 8, **dadurch gekennzeichnet, dass** der Achskreuzwinkel (∑) zwischen der Werkzeugdrehachse (WZ) und der Werkstückdrehachse (WS) 90° beträgt.

10. Verfahren nach einem der Ansprüche 7 bis 9, **dadurchgekennzeichnet, dass** das Werkstück (2) und das Wälzschälwerkzeug (1) in einer achsparallel zur Werkstückdrehachse (WS) gerichteten Bewegungsrichtung relativ zueinander bewegt werden.

11. Maschine zum Erzeugen eines Verzahnungsprofils (VP) an einem Werkstück (2) mittels Wälzschälen, umfassend ein Wälzschälwerkzeug (1), einen ersten Drehantrieb zum rotierenden Antreiben des Wälzschälwerkzeugs (1) um eine Werkzeugdrehachse (WZ), eine Einspannung zum Halten des Werkstücks (2) und einen zweiten Drehantrieb zum rotierenden Antreiben des jeweiligen in der Einspannung gehaltenen Werkstücks (2), wobei die Drehantriebe miteinander gekoppelt sind,
**dadurch gekennzeichnet, dass** das Wälzschälwerkzeug (1) gemäß einem der Ansprüche 1 bis 6 ausgebildet ist, **dass** die Werkzeugdrehachse (WZ) und die Werkstückdrehachse (WS) nach Art der Drehachsen eines Winkelgetriebes einander unter einem Achskreuzwinkel (∑) kreuzend zueinander ausgerichtet sind und **dass** ein Achsversatz (a) zwischen der Werkstückdrehachse (WS) und der Werkzeugdrehachse (WZ) vorgesehen ist, um eine Schnittgeschwindigkeitskomponente (v_{c}) in Zahnlückenrichtung (ZR) des zu erzeugenden Verzahnungsprofils (VP) zwischen dem Werkstück (2) und dem Wälzschälwerkzeug (1) zu bewirken.

12. Maschine nach Anspruch 11, **dadurch gekennzeichnet, dass** sie eine Vorschubeinrichtung (zᵥ) umfasst, die während des Wälzschälbetriebs eine Relativbewegung zwischen dem Werkstück (2) und dem Wälzschälwerkzeug (1) entlang einer achsparallel zur Werkstückdrehachse (WS) ausgerichteten Bewegungsachse bewirkt.

13. Maschine nach Anspruch 11 oder 12, **dadurch gekennzeichnet, dass** der Achskreuzwinkel (∑) fest eingestellt ist.

14. Maschine nach einem der Ansprüche 12 oder 13,
**dadurch gekennzeichnet, dass** sie eine Einrichtung zum Zustellen des Wälzschälwerkzeugs (1) entlang einer achsparallel zur Werkzeugachse (WZ) ausgerichteten Zustellachse umfasst.

## Claims

1. Skiving tool for producing a tooth profile (VP) on a workpiece (2), **characterised in that** the skiving tool (1) is modelled as a crown gear, on the front of which a tooth system (SP) with a cutting profile (5) is provided which when in use reproduces the tooth profile (VP) on the workpiece (2).

2. Skiving tool according to Claim 1, **characterised in that** the cutting profile (5) is modelled on the outer circumference of the tooth system (SP).

3. Skiving tool according to one of the above claims, **characterised in that** the tooth system (SP) is modelled in the form of a ring in an edge region of the skiving tool (1) associated with the outer circumference of the front.

4. Skiving tool according to one of the above claims, **characterised in that** the tooth system (SP) is modelled like that of a helical gearing.

5. Skiving tool according to one of the above claims, **characterised in that** the tooth system (SP) starting from the cutting surface (5) is tapered over the width of the profile.

6. Skiving tool according to one of the above claims, **characterised in that** the profile height and profile thickness of the tooth system (SP) starting from the cutting surface (5) reduce in the direction of the tool axis of rotation (WZ).

7. Method for producing a tooth profile (VP) on a workpiece (2) by performing a coupled skiving movement between a skiving tool (1) and the workpiece (2), wherein the skiving tool (1) is rotated about a tool axis of rotation (WZ) and the workpiece (2) about a workpiece axis of rotation (WS), **characterised in that** the skiving tool (1) is modelled according to one of Claims 1 to 6, the tool axis of rotation (WZ) and the workpiece axis of rotation (WS) in the manner of the axes of rotation of an angular gear are aligned intersecting each other at an axis intersection angle (∑) and **in that** an offset (a) is provided between the workpiece axis of rotation (WS) and the tool axis of rotation (WZ), in order to achieve a cutting speed component (v_{c}) in the tooth gap direction (ZR) of the tooth profile (VP) to be created between the workpiece (2) and the skiving tool (1).

8. Method according to Claim 7, **characterised in that** the axis intersection angle (∑) between the tool axis of rotation (WZ) and the workpiece axis of rotation (WS) is 85-95°.

9. Method according to Claim 8, **characterised in that** the axis intersection angle (∑) between the tool axis of rotation (WZ) and the workpiece axis of rotation (WS) is 90°.

10. Method according to one of Claims 7 to 9, **characterised in that** the workpiece (2) and the skiving tool (1) are moved relative to each other in a movement direction directed axially-parallel to the workpiece axis of rotation (WS).

11. Machine for producing a tooth profile (VP) on a workpiece (2) by skiving, comprising a skiving tool (1), a first rotary drive for rotationally-driving the skiving tool (1) about a tool axis of rotation (WZ), a clamp for retaining the workpiece (2) and a second rotary drive for rotationally-driving the respective workpiece (2) held in the clamp, wherein the rotary drives are coupled together, **characterised in that** the skiving tool (1) is modelled according to one of Claims 1 to 6, **in that** the tool axis of rotation (WZ) and the workpiece axis of rotation (WS) in the manner of the axes of rotation of an angular gear are aligned intersecting with each other at an axis intersection angle (∑), and **in that** an offset (a) is provided between the workpiece axis (WS) and the tool axis (WZ), in order to achieve a cutting speed component (v_{c}) in the tooth gap direction (ZR) of the tooth profile (VP) to be created between the workpiece (2) and the skiving tool (1).

12. Machine according to Claim 11, **characterised in that** it comprises a feed device (zᵥ), which during the skiving operation performs a relative movement between the workpiece (2) and the skiving tool (1) along an axis of motion axially-parallel to the workpiece axis of rotation (WS).

13. Machine according to Claim 11 or 12, **characterised in that** the axis intersection angle (∑) has a set value.

14. Machine according to one of Claims 12 or 13, **characterised in that** it comprises a device for feeding the skiving tool (1) along an infeed axis aligned axially-parallel to the tool axis (WZ).

## Revendications

1. Outil de taillage des engrenages par développante destiné à fabriquer un profil denté (VP) sur une pièce (2), **caractérisé en ce que** l'outil de taillage des engrenages par développante (1) est conçu en tant que couronne dentée, sur le côté avant de laquelle l'on prévoit une denture (SP) avec un profil tranchant (5) qui, en cours d'utilisation, représente le profil denté (VP) sur la pièce (2).

2. Outil de taillage des engrenages par développante selon la revendication 1, **caractérisé en ce que** le profil tranchant (5) est conçu sur la périphérie extérieure de la denture (SP).

3. Outil de taillage des engrenages par développante selon l'une des revendications précédentes, **caractérisé en ce que** la denture (SP) est conçue en forme d'anneau dans une zone de bordure de l'outil par taillage des engrenages par développante (1) associée à la périphérie extérieure du côté avant.

4. Outil de taillage des engrenages par développante selon l'une des revendications précédentes, **caractérisé en ce que** la denture (SP) est conçue à la façon d'une denture inclinée.

5. Outil de taillage des engrenages par développante selon l'une des revendications précédentes, **caractérisé en ce que** la denture (SP) est effilée sur la largeur du profil en partant de la surface de serrage (5).

6. Outil de taillage des engrenages par développante selon l'une des revendications précédentes, **caractérisé en ce que** la hauteur du profil et l'épaisseur du profil de la denture (SP) diminuent en partant de la surface de serrage (5) en direction de l'axe de l'outil (WZ).

7. Procédé destiné à fabriquer un profil denté (VP) sur une pièce (2) en exécutant un mouvement de taillage des engrenages par développante couplé entre un outil de taillage des engrenages par développante (1) et la pièce (2), l'outil de taillage des engrenages par développante (1) tournant autour d'un axe de rotation d'outil (WZ) et la pièce (2) tournant autour de l'axe de rotation de la pièce (WS), **caractérisé en ce que** l'outil de taillage des engrenages par développante (1) est conçu selon l'une des revendications 1 à 6, **en ce que** l'axe de rotation d'outil (WZ) et l'axe de rotation de la pièce (WS) sont orientés l'un par rapport à l'autre de manière croisée à la façon de l'axe de rotation d'un engrenage angulaire selon un angle de croisement axial (∑) et **en ce que** l'on prévoit un décalage axial (a) entre l'axe de rotation de la pièce (WS) et l'axe de rotation d'outil (WZ) dans le but d'entraîner un composant de la vitesse de coupe (v_{c}) en direction de l'entredent (ZR) du profil denté (VP) à réaliser entre la pièce (2) et l'outil de taillage des engrenages par développante (1).

8. Procédé selon la revendication 7, **caractérisé en ce que** l'axe de croisement axial (∑) entre l'axe de rotation d'outil (WZ) et l'axe de rotation de la pièce (WS) est de 85 - 95°.

9. Procédé selon la revendication 8, **caractérisé en ce que** l'axe de croisement axial (∑) entre l'axe de rotation d'outil (WZ) et l'axe de rotation de la pièce (WS) est de 90°.

10. Procédé selon l'une des revendications 7 à 9, **caractérisé en ce que** la pièce (2) et l'outil de taillage des engrenages par développante (1) sont déplacés l'un par rapport à l'autre dans une direction du mouvement orientée de façon axialement parallèle par rapport à l'axe de rotation de la pièce (WS).

11. Machine destinée à fabriquer un profil denté (VP) sur une pièce (2) par taillage des engrenages par développant, comportant un outil de taillage des engrenages par développante (1), un premier entraînement rotatif pour un entraînement en rotation de l'outil de taillage des engrenages par développante (1) autour d'un axe de rotation d'outil (WZ), un serrage pour maintenir la pièce (2) et un deuxième entraînement rotatif pour l'entraînement en rotation de la pièce (2) respective maintenue par serrage, les entraînements rotatifs étant couplés l'un avec l'autre, **caractérisée en ce que** l'outil de taillage des engrenages par développante (1) est conçu selon l'une des revendications 1 à 6, **en ce que** l'axe de rotation d'outil (WZ) et l'axe de rotation de la pièce (WS) sont orientés l'un par rapport à l'autre de manière croisée à la façon de l'axe de rotation d'un engrenage angulaire selon un angle de croisement axial (∑) et **en ce que** l'on prévoit un décalage axial (a) entre l'axe de rotation de la pièce (WS) et l'axe de rotation d'outil (WZ) dans le but d'entraîner un composant de la vitesse de coupe (v_{c}) en direction de l'entredent (ZR) du profil denté (VP) à réaliser entre la pièce (2) et l'outil de taillage des engrenages par développante (1).

12. Machine selon la revendication 11, **caractérisée en ce qu'**elle comporte un dispositif d'avance (zᵥ) qui provoque, pendant le fonctionnement par taillage des engrenages par développante, un mouvement relatif entre la pièce (2) et l'outil de taillage des engrenages par développante (2) le long d'un axe de mouvement dirigé parallèlement à l'axe par rapport à l'axe de rotation de la pièce (WS).

13. Machine selon la revendication 11 ou 12, **caractérisée en ce que** l'angle de croisement axial (∑) est réglé de manière fixe.

14. Machine selon l'une des revendications 12 ou 13, **caractérisée en ce qu'**elle comporte un dispositif permettant de positionner l'outil de taillage des engrenages par développante (1) le long d'un axe de positionnement dirigé parallèlement à l'axe par rapport à l'axe de rotation d'outil (WZ).
